# EUROPEAN PATENT APPLICATION

(11) **EP 2 639 614 A1**
(43) Date of publication of application: **18.09.2013**
(21) Application number: 12159911.2
(22) Date of filing: 16.03.2012
(51) Int. Cl.: G02B 6/44

(54) **Fiber optic patch unit and fiber optic distribution device**

(71) Applicant: CCS Technology, Inc., Wilmington, DE 19803 (US)
(72) Inventor: Ruda, Michal, 93-377 Lodz (PL)
(74) Representative: Sturm, Christoph

(57) **Abstract**

A fiber optic fiber optic (10) for handling patch connections between optical fibers (11), the fiber optic patch unit (10) comprises a first part (13) by which the fiber optic patch unit (10) is mountable to a support structure, wherein the first part (13) provides a guide element (15) for optical fibers (11); a second part (14) pivotably attached to the first part (13), wherein the second part (14) provides a patch panel (16) and adjacent to at least two sides of the patch panel (16) a guide element (17, 18) for optical fibers (11).

## Description

The present patent application relates to a fiber optic patch unit. Further on, the present patent application relates to a fiber optic distribution device comprising at least two fiber optic patch units.

When designing data transmission networks comprising optical fibers, it is necessary to connect optical fibers to one another. Such junctions can be provided by patch connections and splice connections. Such junctions need to be handled both outside buildings and inside buildings. Outside buildings, junctions between optical fibers are accommodated in so called cable sleeves or street cabinets. Inside buildings, junctions between optical fiber are handled in so called distribution cabinets or distribution frames. So called wall boxes are used for the handling of junctions between optical fibers both outside buildings and inside buildings. The present patent application relates to a fiber optic patch unit for handling patch connections between optical fibers and to a fiber optic distribution device like a distribution cabinet comprising at least two fiber optic patch units.

The present application is based on the problem of providing a novel fiber optic patch unit and a novel fiber optic distribution device suitable for handling patch connections between optical fibers both outside buildings and inside buildings. The fiber optic patch unit according to the present patent application is defined in claim 1. The fiber optic patch unit according to the present patent application comprises a first part by which the fiber optic patch unit is mountable to a support structure and a second part pivotably attached to the first part. The first part provides a guide element for optical fibers. The second part provides a patch panel and adjacent to at least two sides of the patch panel a guide element for optical fibers.

The fiber optic patch unit of the present patent application is a high density, easy access fiber optic patch unit. The same provides an increased port density of patch connections, save handling of optical fibers and good accessibility of patch connections. Preferably, the second part of the fiber optic patch unit comprises a plate-like patch panel frame having a front side and a back side and a plurality of mounting holes for fiber optic adapters extending through the plate-like patch panel frame from the front side to the back side. The mounting holes and thereby the fiber optic adapters received in the mounting holes are arranged in an array forming columns and rows of mounting holes and thereby columns and rows of fiber optic adapters received in the mounting holes. This provides further improved accessibility of patch connections and further increased port density of patch connections.

According to a preferred further development, the second part of the fiber optic patch unit comprises adjacent to a first edge of the plate-like patch panel frame a first guide element for optical fibers through which optical fibers can be guided in the region of the front side and in the region of the back side of the plate-like patch panel frame. The second part of the fiber optic patch unit further comprises adjacent to a second edge of the plate-like patch panel frame a second guide element for optical fibers through which optical fibers can be guided in the region of the front side and in the region of the back side of the plate-like patch panel frame, wherein the second edge runs perpendicular to the first edge and thereby the second guide element runs perpendicular to the first guide element. In a first relative position of the second part of the fiber optic patch unit with respect to the first part of the fiber optic patch unit the first guide element provided adjacent to the first edge of the plate-like patch panel frame of the second part runs in perpendicular extension to the guide element provided by the first part, wherein the second guide element provided adjacent to the second edge of the plate-like patch panel frame of the second part runs on the one hand in perpendicular extension to the first guide element provided by the second part and on the other hand in parallel to the guide element provided by the first part. In a second relative position of the second part of the fiber optic patch unit with respect to the first part of the fiber optic patch unit the first guide element provided adjacent to the first edge of the plate-like patch panel frame of the second part runs in parallel extension to the guide element provided by the first part, wherein the second guide element provided adjacent to the second edge of the plate-like patch panel frame of the second part runs on the one hand in perpendicular extension to the first guide element provided by the second part and on the other hand in perpendicular to the guide element provided by the first part. This provides further improved handling of optical fibers and further improved accessibility of patch connections.

Preferably, the plate like patch panel frame comprises adjacent to the first guide element a through opening for guiding optical fibers between the front side and the back side of the plate like patch panel frame. The second guide element provides adjacent to the front side of the plate like patch panel frame a first guide channel and adjacent to the second side of the plate like patch panel frame a second guide channel, wherein each of the guide channels of the second guide element of the second part comprises several through openings for guiding optical fibers to adapters of the patch panel. This provides further improved handling of optical fibers and further improved accessibility of patch connections.

A hinge by which the second part of the fiber optic patch unit is pivotably attached to the first part of the fiber optic patch unit is positioned at a corner of the plate-like patch panel frame, preferably in a region between the guide element provided by the first part and the first guide element of the second part. This provides further improved handling of optical fibers.

The fiber optic distribution device according to the present patent application comprises at least two fiber optic patch units.

Preferred embodiments of the fiber optic distribution device and fiber optic management unit are given in the dependent claims and the description below. Exemplary embodiments will be explained in more detail with reference to the drawing, in which:
- Figure 1: shows a first perspective view of a fiber optic patch unit in a first status of the same;
- Figure 2: shows a second perspective view of the fiber optic patch unit of Figure 1 in a second status of the same;
- Figure 3: shows fiber optic patch unit of Figure 1 together with optical fibers;
- Figure 4: shows fiber optic patch unit of Figure 2 together with optical fibers;
- Figure 5: shows a top view of the fiber optic management unit of Figures 1-4;
- Figure 6: shows a side view of the fiber optic management unit of Figures 1-4 together with a splitter unit;
- Figure 7: shows a perspective view of two fiber optic patch units of Figures 1-4 in a first status;
- Figure 8: shows the two fiber optic patch units of Figure 7 in a second status;
- Figure 9: shows a perspective view of four fiber optic patch units of Figures 1-4;
- Figure 10: shows a front view of the four fiber optic patch units of Figure 9;
- Figure 11: shows a top view of the four fiber optic patch units of Figure 9;
- Figure 12: shows a side view of six fiber optic patch units of Figures 1-4 all being in the second status of the same;
- Figure 13: shows a side view of the six fiber optic patch units of Figure 12 all being in the first status of the same; and
- Figure 14: shows a top view of the six fiber optic patch units of Figure 12 all being in the first status of the same.

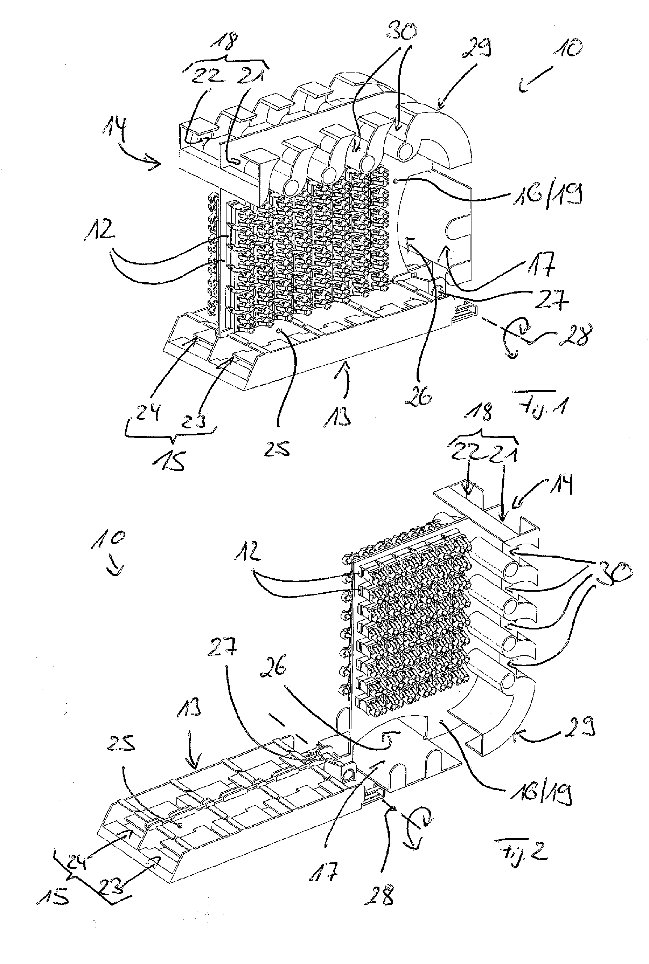

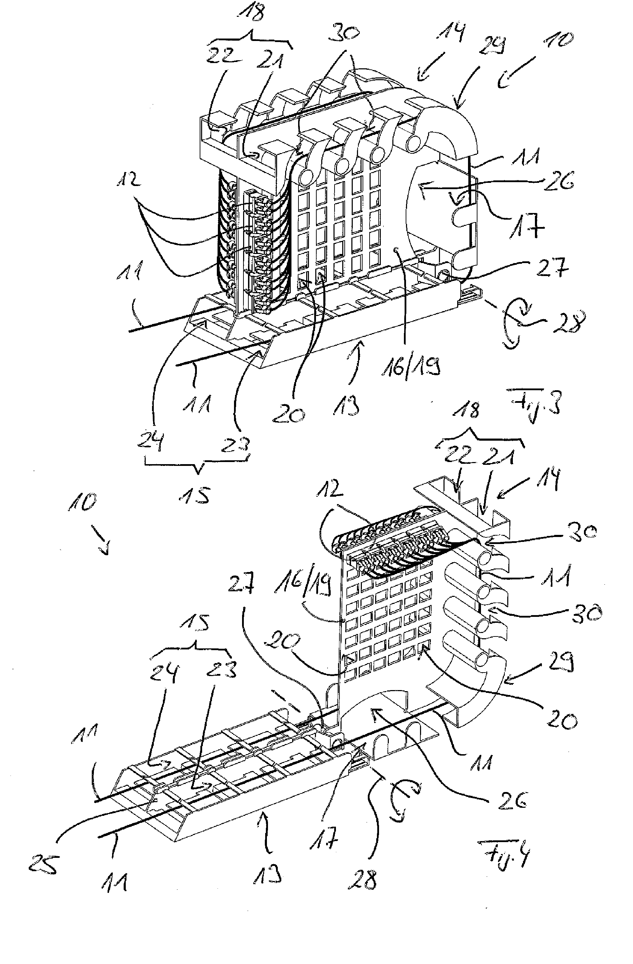

Figures 1 to 4 each show a fiber optic patch unit 10 suitable for the handling of patch connections between optical fibers. Figures 1 and 2 each show the fiber optic patch unit 10 fully equipped with fiber optic adapters 12. Figures 3 and 4 each show the fiber optic patch unit 10 partially equipped with fiber optic adapters 12 and with optical fibers 11 connected to the adapters 12.

The fiber optic patch unit 10 comprises a first part 13 by which the fiber optic patch unit 10 is mountable to a support structure (not shown) of a fiber optic distribution device and a second part 14 pivotably attached to the first part 13.

The first part 13 of the fiber optic patch unit 10 provides a guide element 15 for optical fibers 11.

The second part 14 fiber optic patch unit 10 provides a patch panel 16 and adjacent to at least two sides of the patch panel 16 additional guide elements 17, 18 for optical fibers 11.

The second part 14 of the fiber optic patch unit 10 comprises a plate-like patch panel frame 19 having a front side and a back side and a plurality of mounting holes 20 for fiber optic adapters 12. The mounting holes 20 extend through the plate-like patch panel frame 19 from the front side to the back side. The mounting holes 20 and thereby the fiber optic adapters 12 received in the mounting holes 19 are arranged in form of an array forming columns and rows of mounting holes 20 and thereby columns and rows of fiber optic adapters 12 received in the mounting holes 20.

The second part 14 of the fiber optic patch unit 10 further comprises adjacent to a first edge of the plate-like patch panel frame 19 a first guide element 17 for optical fibers 11 through which optical fibers 11 can be guided along the first edge in the region of the front side and in the region of the back side of the plate-like patch panel frame 19.

The second part 14 of the fiber optic patch unit 10 further comprises adjacent to a second edge of the plate-like patch panel frame 19 a second guide element 18 for optical fibers 11 through which optical fibers 11 can be guided along the second edge in the region of the front side and in the region of the back side of the plate-like patch panel frame.

The second edge and thereby the second guide element 18 runs perpendicular to the first edge and thereby to the first guide element 17.

The plate-like patch panel frame 19 divides the second guide element 18 into two guide channels 21, 22. The guide channel 21 guides optical fibers 11 along the second edge in the region of the front side of the plate-like patch panel frame 19. The guide channel 22 guides optical fibers 11 along the second edge in the region of the back side of the plate-like patch panel frame 19.

The plate plate-like patch panel frame 19 comprises adjacent to the first guide element 17 a through opening 26. The through opening 26 makes the second part 14 of the fiber optic patch unit 10 manufacturable by injection molding for example.

The guide element 15 provided by the first part 13 of the fiber optic patch unit 10 comprises also two guide channels 23, 24 separated by a wall 25 of the first part 13. In a first relative position of the second part 14 of the fiber optic patch unit 10 with respect to the first part 13 of the fiber optic patch unit 10 (see Figures 1 and 3) the wall 25 and the plate plate-like patch panel frame 19 extend each other. In the first relative position of the second part 14 of the fiber optic patch unit 10 with respect to the first part 13 of the fiber optic patch unit 10, the guide channel 23 of the guide element 15 guides optical fibers 11 in the region of the front side of the plate-like patch panel frame 19 and the guide channel 24 of the guide element 15 guides optical fibers 11 in the region of the back side of the plate-like patch panel frame 19.

As mentioned above, the second part 14 of the fiber optic patch unit 10 is pivotably attached to the first part 13 of the fiber optic patch unit 10. A hinge 27 by which the second part 14 is pivotable relative to the first part 13 is positioned at a corner of the plate-like patch panel frame 19. Figures 1 to 4 show a pivoting axis 28 of the hinge 27.

The hinge 27 is positioned between the guide element 15 provided by the first part 13 of the fiber optic patch unit 10 and the first guide element 17 of the second part 14 of the fiber optic patch unit 10.

In the first relative position of the second part 14 of the fiber optic patch unit 10 with respect to the first part 13 of the fiber optic patch unit 10 (see Figures 1 and 3) the first guide element 17 provided adjacent to the first edge of the plate-like patch panel frame 19 of the second part 14 runs in perpendicular extension to the guide element 13 provided by the first part 13.

Further on, in the first relative position of the second part 14 of the fiber optic patch unit 10 with respect to the first part 13 of the fiber optic patch unit 10 (see Figures 1 and 3) the second guide element 18 provided adjacent to the second edge of the plate-like patch panel frame 19 of the second part 14 runs on the one hand in perpendicular extension to the first guide element 17 provided by the second part 14 and on the other hand in parallel to the guide element 15 provided by the first part 13.

In a second relative position of the second part 14 of the fiber optic patch unit 10 with respect to the first part 13 of the fiber optic patch unit 10 (see Figures 2 and 4) the first guide element 17 provided adjacent to the first edge of the plate-like patch panel frame 19 of the second part 14 runs in parallel extension to the guide element 15 provided by the first part 13.

Further on, in the second relative position of the second part 14 of the fiber optic patch unit 10 with respect to the first part 13 of the fiber optic patch unit 10 (see Figures 2 and 4) the second guide element 18 provided adjacent to the second edge of the plate-like patch panel frame 19 of the second part 14 runs on the one hand in perpendicular extension to the first guide element 17 provided by the second part 14 and on the other hand in perpendicular to the guide element 15 provided by the first part 13.

In the region of a corner of the plate-like patch panel frame 19, namely between the first guide element 17 provided adjacent to the first edge of the plate-like patch panel frame 19 and the second guide element 18 provided adjacent to the second edge of the plate-like patch panel frame 19, there is positioned a curved guide element 29. The optical fibers 11 can be guided from the first guide element 17 to the second guide element 18 through the curved guide element 29.

Optical fibers 11 enter into the fiber optic patch unit 10 through the guide element 15 or guide channels 23, 24 of the first part 13 of the fiber optic patch unit 10. From the first part 13 of the fiber optic patch unit 10 the fibers are guided into the second part 14 of the fiber optic patch unit 10, namely at first in the first guide element 17 and afterward into the second guide element 18 of the second part, namely into the guide channels 21, 22 of the second guide element 18 of the second part 14.

The guide channels 21, 22 of the second guide element 18 of the second part 14 comprise several through openings 30 for guiding the optical fibers 11 from the guide channels 21, 22 to the adapters 12 of the patch panel 16. In the first relative position of the second part 14 of the fiber optic patch unit 10 with respect to the first part 13 of the fiber optic patch unit 10 (see Figures 1 and 3), to each column of fiber optic adapters 12 there is preferably assigned an individual through opening 30 of each of the guide channels 21, 22 of the second guide element 18 so that the optical fibers 11 can be guided individually to the different columns of fiber optic adapters 12.

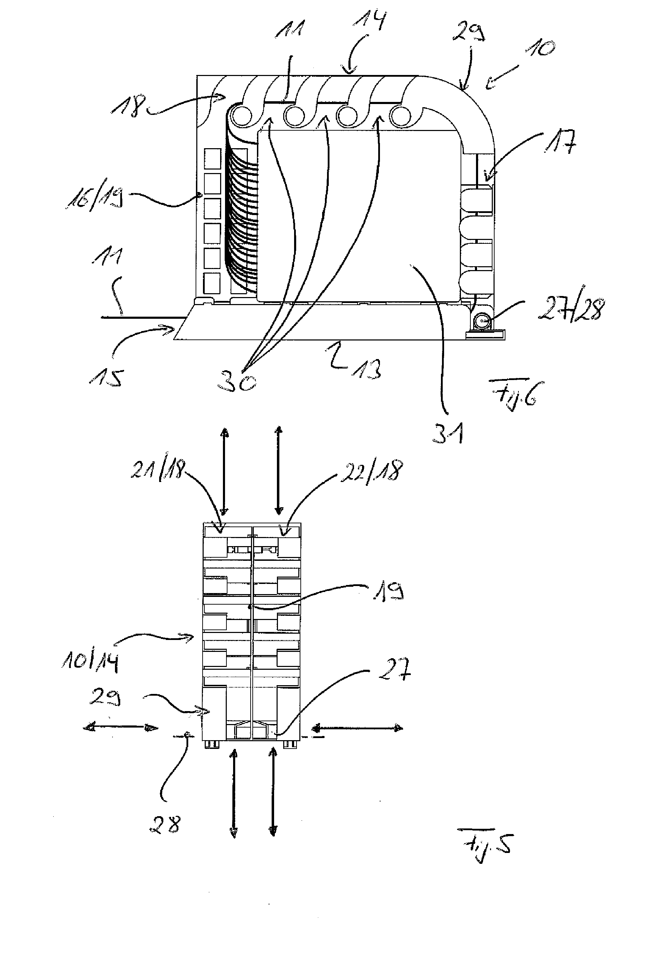

When the second part 14 of the fiber optic patch unit 10 is pivoted relative to the first part 13 of the fiber optic patch unit 10 the optical fibers 11 are not subject to any movement. So, the second part 14 of the fiber optic patch unit 10 can pivoted relative to the first part 13 of the fiber optic patch unit 10 around the pivoting axis 28 of the hinge 27 without stressing the optical fibers 11. The arrows in Figure 5 illustrate possible exit/entry directions of optical fibers 11 from/into the fiber optic patch unit 10.

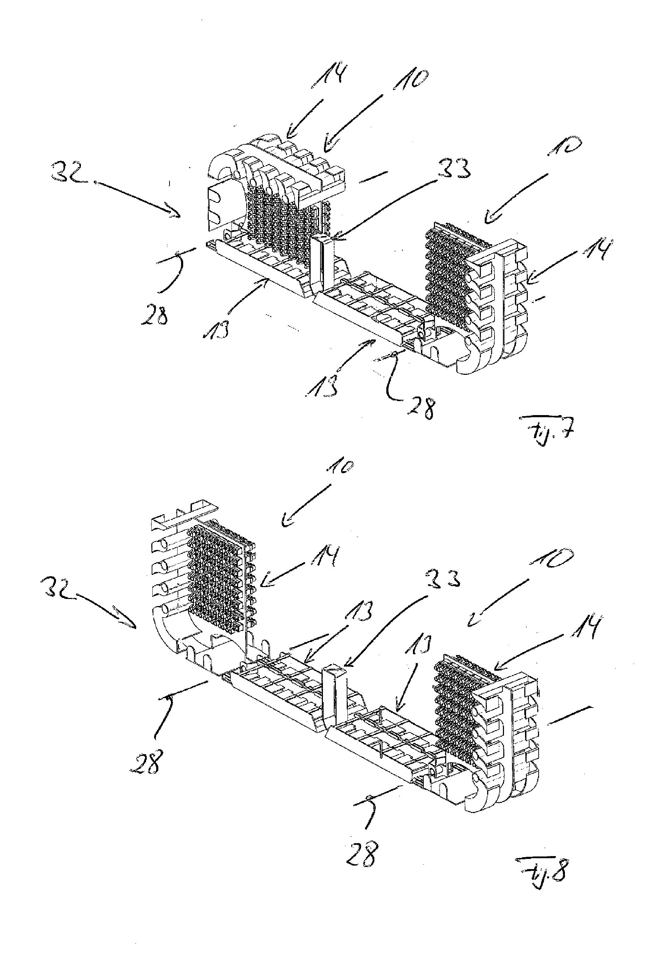

As shown in Figure 6, the fiber optic patch unit 10 can receive a splitter unit 31 or a wave-division multiplexer unit at both sides of the plate-like patch panel frame 19. The splitter unit 31 or wave-division multiplexer unit can be positioned adjacent the front side and adjacent the back side in a region between the guide elements 15, 17 and 18. Figures 7 and 8 each show an arrangement of two fiber optic patch units 10. The two fiber optic patch units 10 are positioned in one row 32 in such a way that the first parts 13 of the same run in parallel extension to each other.

The second parts 14 of the fiber optic management units 10 positioned in the row 32 need to be pivoted in opposite directions relative to the respective first parts 13 of the same in order to pivot them from the first relative position into the second relative position.

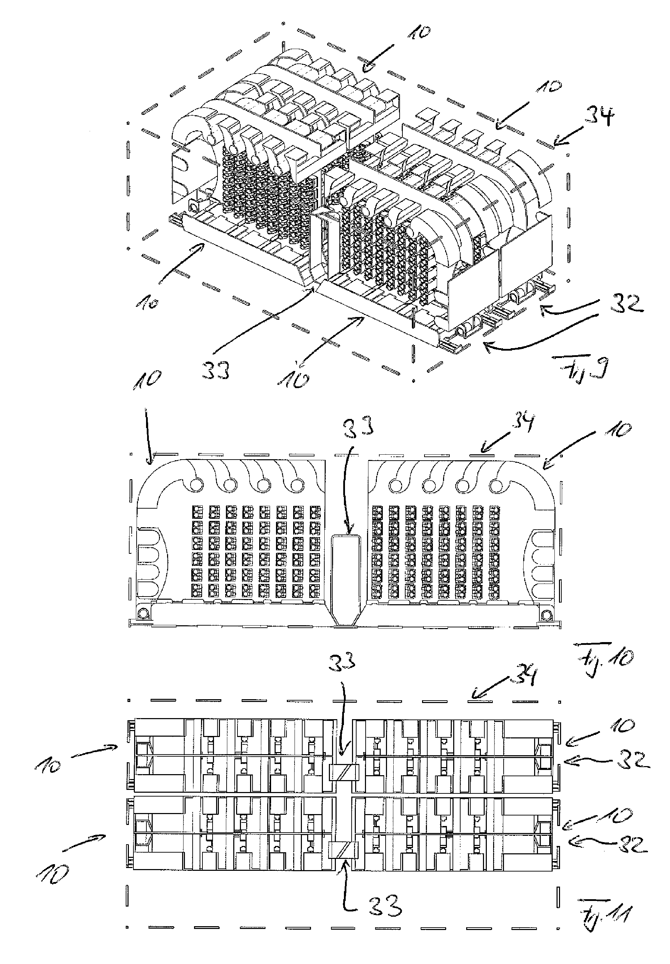

An additional guide element 33 is positioned between the two fiber optic patch units 10. so that fibers 11 can be guided between fiber optic management units 10 positioned in different rows (see Figures 9 to 11). Figures 9 to 11 show an arrangement of four fiber optic patch units 10. The four fiber optic patch units 10 are positioned in two rows 32. Each row 32 of fiber optic patch units 10 corresponds to the row 32 of fiber optic patch units 10 shown in Figures 7 and 8. Figure 9 to 11 illustrate in dashed lines the dimensions of a boundary of a fiber optic distribution device 34.

The fiber optic distribution device 34 can be e.g. a 19" device of 4U height. When the fiber optic patch units 10 are not subjected to operation, they remain closed inside the boundary of the fiber optic distribution device 34, using the available space in a very uniform manner. As shown in Figures 9 to 11, in standard 19" device of 4U height, it is possible to freely install four fiber optic patch units 10. Assuming that each fiber optic patch unit 10 can provide a density of 48 standard size SC-like connectors or 96 SFF LC-like connectors, the arrangement of Figures 9 to 11 provided an overall patching density equal to 192 standard size connectors or 384 SFF connectors. As an extreme, six fiber optic patch units 10 can be placed inside the boundary of a 19" 4U device, raising the patching density up to 288 standard size connectors or 576 SFF connectors. Generally, the invention provides scalability, hence the number of fiber optic patch units 10 can be adjusted to different boundary depth of the fiber optic distribution device 34. For operation purposes, a given fiber optic patch unit 10 must be opened by pivoting the second part 14 of the same relative to the first part 13 of the same in order to provide good access to the respective patch area 16. Each fiber optic patch unit 10 can be opened independently. Good access from one side or both sides is provided at the same time.

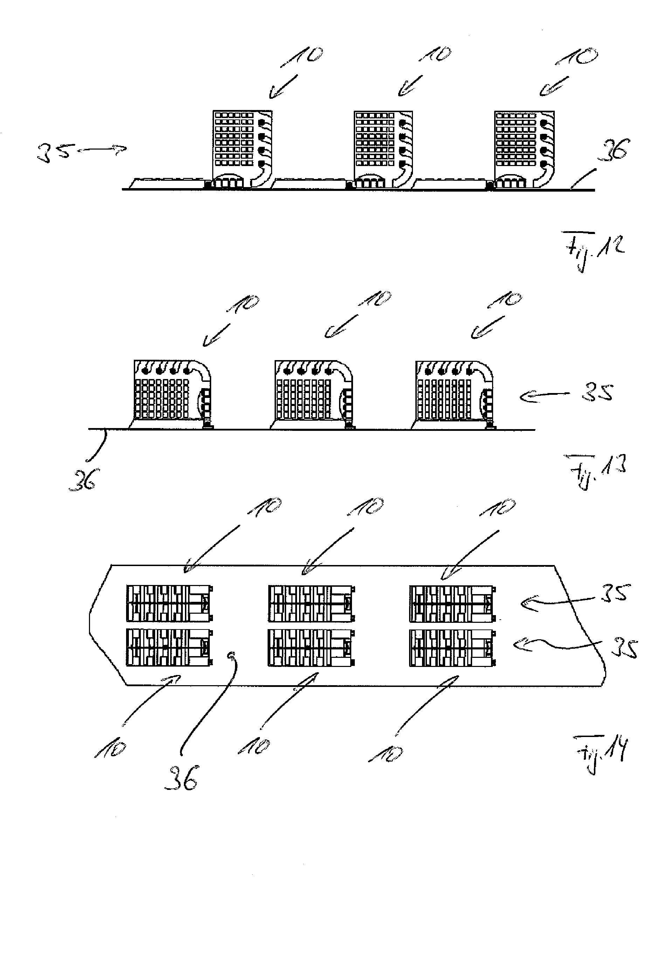

Figures 12 to 14 show an arrangement of six fiber optic patch units 10. The four fiber optic patch units 10 are positioned in two rows 35. Within each row 35, the first parts 13 of the respective fiber optic patch units 10 run in parallel extension to each other.

The second parts 14 of the fiber optic management units 10 positioned in the rows 35 need to be pivoted in identical directions relative to the respective first parts 13 of the same in order to pivot them from the first relative position into the second relative position.

In Figures 12 to 14 the fiber optic patch units 10 are mounted to a wall 36. The wall 36 can run in horizontal direction or vertical direction.

### List of reference numerals

- 10: fiber optic patch unit
- 11: optical fiber
- 12: adapter
- 13: first part
- 14: second part
- 15: guide element
- 16: patch panel
- 17: guide element
- 18: guide element
- 19: patch panel frame
- 20: mounting holes
- 21: guide channel
- 22: guide channel
- 23: guide channel
- 24: guide channel
- 25: wall
- 26: through opening
- 27: hinge
- 28: pivoting axis
- 29: guide element
- 30: through openings
- 31: splitter unit
- 32: row
- 33: guide element
- 34: fiber optic distribution device
- 35: row
- 36: wall

## Claims

1. A fiber optic patch unit (10) for handling patch connections between optical fibers (11), the fiber optic patch unit (10) comprises
a first part (13) by which the fiber optic patch unit (10) is mountable to a support structure, wherein the first part (13) provides a guide element (15) for optical fibers (11);
a second part (14) pivotably attached to the first part (13), wherein the second part (14) provides a patch panel (16) and adjacent to at least two sides of the patch panel (16) a guide element (17, 18) for optical fibers (11).

2. The fiber optic management unit of claim 1, **characterized in that** the second part (14) comprises a plate-like patch panel frame (19) having a front side and a back side and a plurality of mounting holes (20) for fiber optic adapters (12) extending through the plate-like patch panel frame (19) from the front side to the back side, wherein the mounting holes (20) and thereby the fiber optic adapters (12) received in the mounting holes (20) are arranged in form of an array forming columns and rows of mounting holes (20) and thereby columns and rows of fiber optic adapters (12) received in the mounting holes (20).

3. The fiber optic management unit of claim 2, **characterized in that** the second part (14) comprises adjacent to a first edge of the plate-like patch panel frame (19) a first guide element (17) for optical fibers (11) through which optical fibers (11) can be guided in the region of the front side and in the region of the back side of the plate-like patch panel frame (19) along the first edge.

4. The fiber optic management unit of claim 3, **characterized in that in that** the second part (14) comprises adjacent to a second edge of the plate-like patch panel frame (19) a second guide element (18) for optical fibers (11) through which optical fibers can be guided in the region of the front side and in the region of the back side of the plate-like patch panel frame (19) along the second edge, wherein the second edge runs perpendicular to the first edge and thereby the second guide element (18) runs perpendicular to the first guide element (17).

5. The fiber optic management unit of claim 4, **characterized in that**
in a first relative position of the second part (14) with respect to the first part (13) the first guide element (17) provided adjacent to the first edge of the plate-like patch panel frame (19) of the second part (14) runs in perpendicular extension to the guide element (15) provided by the first part (13), and the second guide element (18) provided adjacent to the second edge of the plate-like patch panel frame (19) of the second part (14) runs on the one hand in perpendicular extension to the first guide element (17) provided by the second part (14) and on the other hand in parallel to the guide element (15) provided by the first part (13),
in a second relative position of the second part (14) with respect to the first part (13) the first guide element (17) provided adjacent to the first edge of the plate-like patch panel frame (19) of the second part (14) runs in parallel extension to the guide element (15) provided by the first part (13), and the second guide element (18) provided adjacent to the second edge of the plate-like patch panel frame (19) of the second part (14) runs on the one hand in perpendicular extension to the first guide element (17) provided by the second part (14) and on the other hand in perpendicular to the guide element (15) provided by the first part (13).

6. The fiber optic management unit of one of claims 3-5, **characterized in that** the plate like patch panel frame (19) comprises adjacent to the first guide element (17) a through opening (26) for guiding optical fibers between the front side and the back side of the plate like patch panel frame (19).

7. The fiber optic management unit of one of claims 4-6, **characterized in that** the second guide element (18) provides adjacent to the front side of the plate like patch panel frame (19) a first guide channel (21) and adjacent to the second side of the plate like patch panel frame (19) a second guide channel (22), wherein each of the guide channels (21, 22) of the second guide element (18) of the second part (14) comprises several through openings (30) for guiding the optical fibers (11) to the adapters (12) of the patch panel (16).

8. The fiber optic management unit of one of claims 2-7, **characterized in that** a hinge (27) by which the second part (14) is pivotably attached to the first part (13) is positioned at a corner of the plate-like patch panel frame (19).

9. The fiber optic management unit of claim 8, **characterized in that** the hinge (27) is positioned between the guide element (15) provided by the first part (13) and the first guide element (17) of the second part (14).

10. The fiber optic management unit of one of claims 1-9, **characterized by** a splitter unit (31) or wave-division multiplexer unit positioned adjacent to the front side and/or adjacent to back side of the plate-like patch panel frame (19).

11. A fiber optic distribution device comprising at least two fiber optic management units (10) of one of claims 1-10.

12. The fiber optic distribution device of claim 11, **characterized in that** at least two fiber optic management units (10) are positioned in at least one row (32, 35) in such a way that the first parts (13) of the same which a positioned in the same row (32, 35) run in parallel extension to each other.

13. The fiber optic distribution device of claim 12, **characterized in that** the second parts (14) of the fiber optic management units (10) which are positioned in the same row (32) are pivotable in opposite directions relative to the respective first parts of the same in order to pivot them from a first relative position into a second relative position.

14. The fiber optic distribution device of claim 13, **characterized in that** a guide element (33) is positioned between two adjacent fiber optic management units (10) which are positioned in the same row (32) so that fibers can be guided between fiber optic management units (10) positioned in different rows.

15. The fiber optic distribution device of claim 12, **characterized in that** the second parts (14) of the fiber optic management units (10) which are positioned in the same row (35) are pivotable in the same direction relative to the respective first parts of the same in order to pivot them from a first relative position into a second relative position.
